# DEMANDE DE BREVET EUROPEEN

(11) **EP 1 633 144 A1**
(43) Date de publication de la demande: **08.03.2006**
(21) Numéro de dépôt: 04292142.9
(22) Date de dépôt: 06.09.2004
(51) Int. Cl.: H04N 7/16

(54) **Procédé de gestion des conditions d accès à un flux vidéo par un routeur / DSLAM**

(71) Demandeur: Nagra France Sarl, 75015 Paris (FR)
(72) Inventeur: Fichet, Laurent, 78320 Le Mesnil Saint Denis (FR); Piquet, Mathieu, 75002 Paris (FR); Lelegard, Thierry, 75015 Paris (FR); Oddou, Christophe, 94340 Joinville le pont (FR)
(74) Mandataire: Wenger, Joel-Théophile

(57) **Abrégé**

La présente invention concerne un procédé de gestion de la diffusion de contenus diffusés par un fournisseur de contenus à au moins une unité multimédia connectée à un dispositif de routage placé entre ledit fournisseur de contenus et ladite unité multimédia. Ce procédé est caractérisé en ce qu'il comporte les étapes suivantes :
a) réception et mémorisation par ledit dispositif de routage (12), de données d'accès indiquant les conditions d'accès aux contenus diffusés par le fournisseur de contenu (13);
b) réception et mémorisation par ledit dispositif de routage (12), de données d'utilisateurs indiquant les droits liés à l'unité multimédia (STB) reliée au dispositif de routage (12);
c) réception par le dispositif de routage (12), d'une requête d'une unité multimédia pour l'obtention d'un contenu spécifique;
d) détermination par le dispositif de routage (12), des conditions d'accès liées audit contenu spécifique et à ladite unité multimédia (STB);
e) selon le résultat de cette détermination, diffusion ou non dudit contenu spécifique à ladite unité multimédia ayant transmis la requête.
f) exécution d'un cycle de réévaluation des droits de ladite unité multimédia, ce cycle de réévaluation comprenant les étapes d) et e).

## Description

### DOMAINE DE L'INVENTION

La présente invention concerne un procédé de gestion de la diffusion de contenus, notamment de contenus télédiffusés et en particulier de contenus de télévision par abonnement ou à péage, ces contenus étant diffusés par un fournisseur de contenus à au moins une unité multimédia connectée à un dispositif de routage. Ce procédé permet en particulier de gérer les autorisations nécessaires à la diffusion de ce contenu.

### ART ANTERIEUR

Comme cela est bien connu, il existe actuellement des systèmes permettant l'accès à des contenus télédiffusés tels que des événements de télévision à péage. De façon très succincte, ces systèmes fonctionnent au moyen d'une unité multimédia comportant un décodeur disposant d'un module de sécurité. Le décodeur reçoit le contenu sous la forme d'un flux de données chiffrées. Le module de sécurité effectue un certain nombre d'opérations cryptographiques afin de déterminer si l'utilisateur du décodeur dispose des droits requis pour la visualisation du contenu et, le cas échéant, pour déchiffrer les données chiffrées.

D'autres systèmes permettant également l'accès à des contenus de télévision par abonnement ou à péage se développent actuellement. Ces systèmes utilisent le réseau Internet et des lignes de type xDSL (Digital Subscriber Line) et en particulier ADSL (Asymmetric Digital Subscriber Line) pour fournir aux abonnés, le contenu télédiffusé.

Dans les systèmes de ce type, un contenu, qui peut être un canal de télévision, un événement tel qu'un film ou un match de sport en particulier, un fichier de musique ou d'autres contenus similaires, est émis sous forme de flux par un centre de diffusion. Les contenus sont transmis au moyen d'une liaison par satellite, terrestre, par câble ou par tout autre moyen ou combinaison de ces différents moyens à des centres de retransmission qui sont en charge de diffuser les données formant ce contenu à destination des unités multimédia concernées. Pour permettre cette diffusion, les infrastructures de retransmission comprennent un dispositif de routage qui est en charge du routage des informations à destination de l'unité multimédia à qui les informations sont destinées. Un tel dispositif de routage est connu sous l'acronyme DSLAM (Digital Subscriber Line Access Multiplexer).

Dans de tels systèmes actuels, les utilisateurs qui souhaitent avoir accès aux contenus proposés par un fournisseur de contenus doivent généralement s'abonner auprès de ce fournisseur. Dans ce cas, tous les contenus gérés par ce fournisseur sont accessibles à l'abonné. Il n'existe en effet pas de moyen efficace pour gérer des droits d'accès à des contenus spécifiques.

La gestion des droits d'accès pourrait se faire au moyen d'un module de sécurité associé à un décodeur tel qu'indiqué précédemment. Toutefois, il existe une demande de la part des opérateurs de télédiffusion et de télécommunication de s'affranchir de l'utilisation d'une carte à puce ou autres modules de sécurité, pour effectuer les opérations de contrôle.

Une solution envisageable consiste à intégrer les fonctionnalités de la carte à puce dans le décodeur. Ceci peut se faire sous forme logicielle. Cette solution n'offre toutefois pas un niveau de sécurité optimal du fait que l'on peut considérer que le décodeur peut être soumis à des manipulations frauduleuses de la part de personnes mal intentionnées. Il n'existe donc actuellement pas de solution permettant d'assurer la sécurité des données à accès conditionnel tout en se passant d'un module de sécurité fiable, dans le cadre d'un service de télévision par le biais du réseau Internet.

Il n'existe pas non plus de moyen simple et efficace pour offrir un abonnement "personnalisé" dans lequel l'abonné peut choisir certains événements ponctuels, certains canaux ou certains bouquets parmi un ensemble proposé par le fournisseur de contenus.

Dans les systèmes de télévision à péage conventionnels, les conditions requises pour accéder à des données peuvent varier dans le temps. A titre d'exemple, au cours d'une journée, le contenu d'un canal déterminé peut être transmis en clair pendant un certain temps et sous forme embrouillée ou chiffrée le reste de la journée. En outre, il arrive souvent que de la publicité qui est diffusée entre deux événements tels que des films ou pendant un événement soit diffusée en clair. Cela implique de fréquents changements de conditions d'accès. Ces changements sont bien gérés dans les systèmes disposant d'un module de sécurité en charge du contrôle des droits. Dans le cas où les événements sont reçus par une ligne de type xDSL, il n'existe actuellement aucune solution simple permettant de gérer ces changements.

Un autre handicap des systèmes de télévision par ligne de type xDSL concerne l'acquisition d'événements ponctuels (PPV). Dans les systèmes actuels, ce type de produits n'est pas proposé parce qu'il n'existe pas de moyens de les gérer. Les seuls produits proposés actuellement sont les canaux ou plus généralement les bouquets.

### BUTS DE L'INVENTION

La présente invention se propose de pallier les inconvénients des procédés de l'art antérieur en réalisant un procédé de gestion de la diffusion de contenus diffusés par un fournisseur de contenus à au moins une unité multimédia connectée à un dispositif de routage placé entre ledit fournisseur de contenus et ladite unité multimédia, caractérisé en ce qu'il comporte les étapes suivantes :
a) réception et mémorisation par ledit dispositif de routage, de données d'accès indiquant les conditions d'accès aux contenus diffusés par le fournisseur de contenus;
b) réception et mémorisation par ledit dispositif de routage, de données d'utilisateurs indiquant les droits liés à l'unité multimédia reliée au dispositif de routage;
c) réception par le dispositif de routage, d'une requête d'une unité multimédia pour l'obtention d'un contenu spécifique;
d) détermination par le dispositif de routage, des conditions d'accès liées audit contenu spécifique et à ladite unité multimédia;
e) diffusion ou non dudit contenu spécifique à ladite unité multimédia ayant transmis la requête.
f) exécution d'un cycle de réévaluation des droits de ladite unité multimédia, ce cycle de réévaluation comprenant les étapes d) et e).

De façon générale, le dispositif de routage permettant la mise en oeuvre du procédé de l'invention contient des informations relatives aux droits requis pour l'accès à chaque contenu géré par le diffuseur. Ce dispositif de routage contient également des informations relatives aux droits acquis par chaque unité multimédia reliée à ce dispositif, ces droits pouvant concerner des bouquets, des canaux ou des événements ponctuels. Lorsqu'une unité multimédia envoie une requête en vue d'obtenir un contenu spécifique, le dispositif de routage détermine une catégorie à laquelle appartient ce contenu. Selon la catégorie déterminée, le dispositif de routage peut entreprendre différentes actions. L'une des actions possibles consiste à envoyer le contenu à l'unité multimédia sans vérification des droits associés à cette unité. Une autre action possible consiste à envoyer le contenu après vérification locale des droits associés à l'utilisateur ou à l'unité multimédia. Dans ce cas, la décision d'envoyer ou non le contenu se prend au niveau du dispositif de routage. Une autre action possible consiste à transférer la requête de l'unité multimédia au fournisseur de données. Le centre de gestion associé à ce fournisseur vérifie les droits associés à l'utilisateur ou à l'unité multimédia et prend la décision de transmettre ou de ne pas transmettre le contenu à cette unité multimédia.

La décision est transmise par le centre de gestion au dispositif de routage, qui agit en conséquence et délivre ou non le contenu à l'unité multimédia initiatrice de la requête.

Les informations relatives aux droits requis pour visualiser les contenus diffusés sont générés par le centre de diffusion. Cela signifie que ce centre définit d'une part à quelle catégorie appartient chaque événement et d'autre part, envoie ces informations aux différents dispositifs de routages liés au centre de diffusion, généralement de façon simultanée.

Lorsqu'un tel message de changement de catégorie a été reçu par le dispositif de routage, ou dans d'autres conditions expliquées en détail ci-dessous, un cycle de réévaluation des droits est exécuté. Ce cycle de réévaluation permet notamment de vérifier quelle unité multimédia est autorisée à obtenir un contenu lorsque les droits liés à ce contenu ont été modifiés.

Lorsqu'une unité multimédia envoie une requête pour l'obtention d'un événement, la catégorie des droits à laquelle appartient cet événement est vérifiée. Ainsi, dès qu'un message de changement de catégorie a été reçu par un dispositif de routage, la nouvelle catégorie s'applique à l'unité multimédia qui envoie une requête. Ceci permet de gérer de façon très souple les changements de conditions d'accès à un événement puisqu'il suffit d'envoyer un seul message par dispositif de routage pour mettre à jour les conditions d'accès d'un événement.

Ce procédé permet en outre de gérer de façon très souple l'achat impulsif d'événements ou de créer des abonnements personnalisés.

### BREVE DESCRIPTION DES FIGURES

La présente invention et ses avantages seront mieux compris en référence à différents modes de réalisation de l'invention dans lesquels :

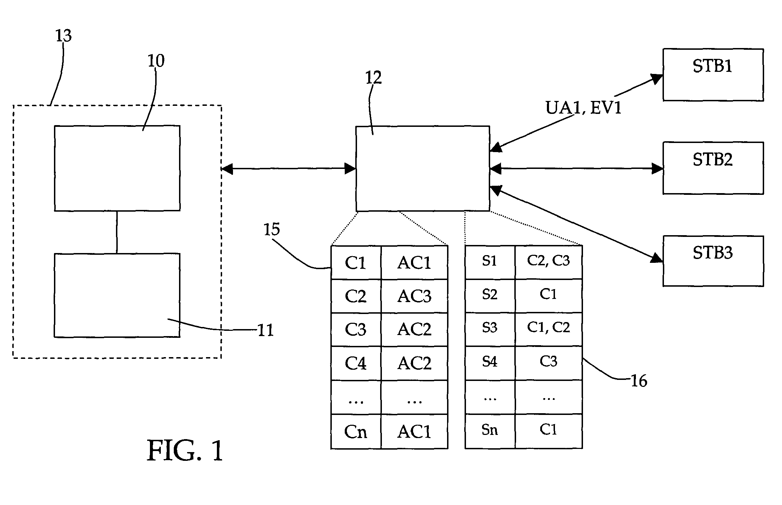

- la figure 1 illustre les éléments permettant la mise en oeuvre du procédé selon l'invention; et
- la figure 2 représente de façon schématique, les étapes du procédé de l'invention.

### MANIÈRES DE RÉALISER L'INVENTION

En référence aux figures, le procédé selon l'invention est appliqué dans un système de transmission de contenus télédiffusés et plus particulièrement un système de télévision numérique par abonnement ou à péage.

Ce système comprend essentiellement un centre de diffusion 10, un centre de gestion 11, au moins un dispositif de routage 12 et une pluralité d'unités multimédia STB1, STB2, STB3.

Le centre de diffusion 10 et le centre de gestion 11 sont généralement associés et sont liés à un fournisseur de contenus 13. Ce centre de diffusion est en charge de la diffusion des contenus, sous la forme d'un flux de données. Cette diffusion se fait, comme indiqué précédemment, via une liaison qui peut être terrestre, par câble ou par satellite ou une combinaison de ces différents types, ou par le réseau Internet (réseau IP) ou tout autre moyen.

Le centre de gestion 11 est notamment en charge de la vérification des droits associés aux unités multimédia ou aux abonnés liés aux contenus diffusés par le centre de diffusion, comme cela est décrit en détail ci-dessous.

Le dispositif de routage 12 reçoit les contenus provenant du centre de diffusion 10. Il est en charge de router ces contenus vers l'unité multimédia ou les unités multimédia STB auxquelles ils sont destinés. Un tel dispositif est typiquement un équipement connu sous l'acronyme DSLAM.

L'unité multimédia STB peut être formée d'un décodeur et d'un équipement de visualisation 14 tel qu'un téléviseur ou un ordinateur notamment. Les unités multimédia sont connectées au dispositif de routage par une liaison point à point.

Le procédé de l'invention comporte essentiellement deux phases, à savoir une phase de contrôle des droits et une phase de mise à jour de ces droits. Ces deux phases sont intimement liées et interagissent puisque la phase de contrôle des droits utilise les droits qui ont été actualisés lors de la phase de mise à jour des droits et la phase de mise à jour peut entraîner un nouveau contrôle des droits.

Selon l'invention, le dispositif de routage contient une table 15 contenant d'une part la liste des contenus disponibles et d'autre part, les conditions d'accès à ces contenus. Ces conditions d'accès peuvent être réparties en plusieurs catégories. Selon un mode de réalisation particulier, les conditions d'accès peuvent être réparties en trois catégories. Ces catégories sont définies ci-dessous. Il doit toutefois être noté qu'un nombre différent de catégories ou d'autres manières de définir ces catégories peut également être mis en oeuvre.

De façon simplifiée, une première catégorie de conditions d'accès peut être la diffusion du contenu demandé à toute unité multimédia qui en a fait la requête. Cette catégorie est référencée par AC1 sur les figures.

Une deuxième catégorie de conditions d'accès peut être la diffusion ou non du contenu demandé, après une vérification locale au niveau du dispositif de routage. Cette catégorie est référencée par AC2 sur les figures.

Une troisième catégorie implique que le dispositif de routage transmet la requête de l'unité multimédia au centre de gestion 11 associé au diffuseur du contenu pour vérification des droits. Cette catégorie est référencée par AC3 sur les figures.

La table mentionnée ci-dessus contient donc, pour chaque contenu, la catégorie des conditions d'accès qui y est associé.

Le dispositif de routage contient en outre une table 16 contenant la liste des unités multimédia STB connectées à ce dispositif de routage. En regard de chaque unité multimédia de cette liste se trouvent tout ou partie des droits associés à l'unité multimédia. Selon un mode de réalisation particulier, il est possible de n'intégrer dans cette table que les droits appartenant ou susceptibles d'appartenir à la deuxième catégorie AC2. En effet, les contenus de la catégorie AC1 sont transférés à chaque unité multimédia qui en fait la demande, sans vérification des droits. Il est donc inutile de mémoriser les droits pour cette catégorie.

De manière similaire, les droits d'accès aux contenus de la troisième catégorie mentionnée AC3 ne sont pas vérifiés dans le dispositif de routage. Il n'est donc pas non plus nécessaire de les mémoriser.

Les droits concernés peuvent être des droits pour un événement ponctuel, par exemple un film, un match de sport, un fichier musical acquis par exemple sous forme d'achat à l'unité ou d'achat impulsif (PPV, pay per view) ou l'accès à un ou des canaux ou à un ou des bouquets auxquels l'utilisateur est abonné.

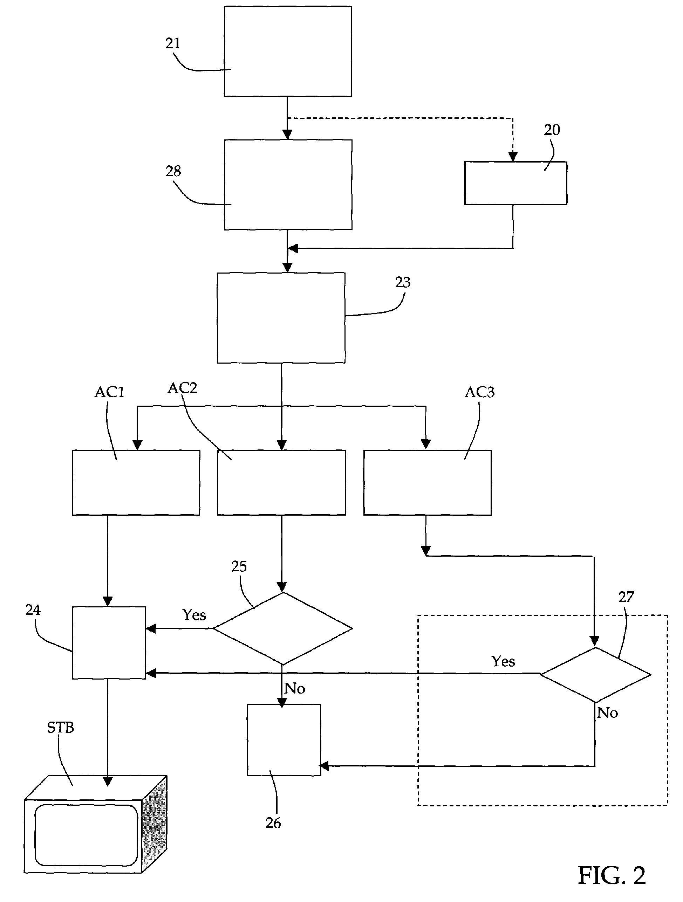

Dans la phase de contrôle des droits, lorsqu'une unité multimédia souhaite accéder à un événement, elle envoie une requête au dispositif de routage. Ceci est représenté par une étape 20 sur la figure 2. L'envoi de cette requête peut être déclenché par exemple à la mise en service de l'unité multimédia ou lorsque l'utilisateur souhaite changer d'événement ou de canal, ce qui est illustré par la référence 21 sur cette figure 2.

Le dispositif de routage détermine l'identité de l'unité multimédia ayant émis la requête ainsi que l'évènement demandé. L'identité de l'unité multimédia peut être déterminée au moyen d'un numéro d'identification UA1 qui est envoyé dans la requête elle-même ou plus simplement au moyen de la ligne utilisée par l'unité multimédia considérée dans le dispositif de routage. Il est également possible de combiner ces deux éléments pour identifier l'unité multimédia. L'événement est déterminé d'après l'identifiant qui est inclus dans la requête envoyée par l'unité multimédia. En fonction de l'identifiant de l'événement, le dispositif de routage recherche, lors d'une étape 23 sur la figure 2, la catégorie de conditions d'accès à laquelle appartient cet événement au moyen de la table 15 des événements.

Lorsque le dispositif de routage détermine que l'événement requis appartient à la première catégorie AC1 mentionnée ci-dessus, le contenu demandé est transmis à l'unité multimédia qui en fait la requête, lors d'une étape 24. L'existence de droits associés à l'unité multimédia ayant transmis la requête n'est pas vérifiée.

Si le dispositif de routage détermine, d'après la table des événements, que l'événement requis appartient à la deuxième catégorie AC2 mentionnée ci-dessus, il doit ensuite vérifier, dans la table des droits 16, si l'unité multimédia concernée dispose bien des droits requis pour recevoir le contenu demandé. Ceci est effectué lors d'une étape 25 illustrée par la figure 2. Si tel est le cas, ce contenu est transféré à l'unité multimédia. Si tel n'est pas le cas, le contenu n'est pas transféré. Ceci est représenté par la référence 26. La vérification des droits est donc effectuée uniquement au niveau local, c'est-à-dire dans le dispositif de routage.

Dans le cas où le dispositif de routage détermine, d'après la table des événements 15, que l'événement requis appartient à la troisième catégorie AC3 mentionnée ci-dessus, le dispositif de routage ne s'occupe pas de la vérification des droits, mais transmet la requête au centre de gestion 11 associé au fournisseur de contenu 13. Cette transmission peut se faire après un traitement de la requête par le dispositif de routage. Le traitement peut par exemple consister à changer le format de la requête, à chiffrer ou déchiffrer le contenu de cette requête et/ou à ajouter un identifiant du dispositif de routage. Le centre de gestion détermine, lors d'une étape 27, si les droits requis pour recevoir cet événement existent pour l'unité multimédia qui a envoyé la requête. Si tel est le cas, l'autorisation d'accès au contenu est transmise au dispositif de routage qui permet la diffusion de contenus vers l'unité multimédia. Si l'unité multimédia ne dispose pas des droits pour recevoir l'événement, différentes solutions sont envisageables. Il est possible de ne rien envoyer du tout. Il est également possible d'envoyer une petite partie du contenu, correspondant par exemple aux premières minutes d'un film. Il est également possible d'afficher un message demandant à l'utilisateur de l'unité multimédia s'il souhaite acquérir les droits pour l'événement. Il est aussi envisageable d'autoriser l'accès, par exemple la première fois que l'utilisateur souhaite avoir accès à un canal déterminé, à quelques minutes de ce canal, puis de ne plus autoriser l'accès les fois suivantes, aussi longtemps que cet utilisateur n'a pas acquis les droits correspondants. Toutefois, la totalité du contenu n'est en principe pas envoyée si l'unité multimédia ne dispose pas des droits correspondants.

### Mise à jour des droits

Lorsque les droits pour un ou plusieurs contenus doivent être modifiés, c'est-à-dire lors de la phase de mise à jour des droits, le centre de diffusion peut envoyer les messages de mise à jour simultanément à tous les dispositifs de routage liés à ce centre. Ces messages de mise à jour comportent les indications relatives à un ou plusieurs canaux ou à un ou plusieurs contenus concernés, ainsi que les nouveaux droits relatifs à ces événements. Les donnés contenues dans ces messages de mise à jour sont mémorisées, lors d'une étape 28 illustrée par la figure 2, dans le dispositif de routage dans la table des événements 15. Les nouvelles conditions d'accès aux contenus sont alors directement opérationnelles, ce qui signifie que, lorsqu'une unité multimédia requiert l'accès à un contenu après réception d'un message de mise à jour, les nouvelles conditions s'appliquent.

La mise à jour des conditions d'accès déclenche un cycle de réévaluation des droits, de telle sorte qu'il est vérifié si les unités multimédia qui accédaient à un contenu spécifique avant la mise à jour des conditions d'accès disposent encore des droits suite à cette mise à jour.

Le cycle de réévaluation des droits peut se faire, comme indiqué ci-dessus, lorsque les conditions d'accès ont été modifiées. Il peut également se faire selon des intervalles de temps prédéfinis, par exemple toutes les 15 minutes.

D'autres informations temporelles peuvent également déclencher la réévaluation des droits. Ces informations peuvent par exemple être l'heure réelle. Ainsi, il est possible de prévoir que les droits soient réévalués tous les jours à 19h et à 9h par exemple.

La vérification des droits peut aussi être déclenchée lorsqu'une durée déterminée est écoulée. Dans ce mode de réalisation, qui s'applique en particulier au cas de l'achat impulsif de contenu, le droit d'accès à ce contenu peut être associé à une durée. Cette durée est mémorisée dans le dispositif de routage de telle sorte que lorsqu'elle est écoulée, le dispositif de routage réévalue de nouveau les droits de l'unité multimédia en question. Cette durée peut être générale au dispositif de routage ou spécifique à chaque unité multimédia, ce qui permet de personnaliser l'accès au contenu. De cette façon, il est possible d'acquérir des droits correspondants à une "tranche horaire" ou à la durée d'un contenu spécifique.

Une autre manière de déclencher le cycle de réévaluation des droits consiste à envoyer une instruction de réévaluation à partir du centre de gestion. Cette instruction peut être ciblée sur une unité multimédia déterminée ou un groupe ou la totalité des unités multimédia.

Selon une variante de réalisation, il est également possible de prévoir que le dispositif de routage soit en mesure de charger toutes les informations qui le concerne, ces informations étant mémorisées dans le centre de gestion. Ceci peut se faire notamment lors de la remise en service du dispositif de routage après un arrêt de celui-ci.

Il est également possible de prévoir un transfert inverse, c'est-à-dire que le dispositif de routage envoie toutes les informations dont il dispose au centre de gestion. Ceci permet au centre de gestion de traiter la gestion de la diffusion, même si les capacités de gestion du dispositif de routage ne sont plus opérationnelles.

La présente invention est particulièrement intéressante du fait de sa grande souplesse d'utilisation. En effet, lors d'un changement de conditions d'accès, il est nécessaire d'envoyer uniquement un message aux dispositifs de routage concernés. Il n'est pas nécessaire d'envoyer un message à toutes les unités multimédia. De plus, ce procédé permet de gérer des événements complexes tels que par exemple l'achat impulsif d'un événement que l'utilisateur peut visualiser 3 fois. Cette souplesse d'utilisation ne se fait pas au détriment de la sécurité, malgré la suppression du module de sécurité au niveau de l'unité multimédia de l'abonné.

## Revendications

1. Procédé de gestion de la diffusion de contenus diffusés par un fournisseur de contenus à au moins une unité multimédia connectée à un dispositif de routage placé entre ledit fournisseur de contenus et ladite unité multimédia, **caractérisé en ce qu'**il comporte les étapes suivantes :
a) réception et mémorisation par ledit dispositif de routage (12), de données d'accès indiquant les conditions d'accès aux contenus diffusés par le fournisseur de contenu (13);
b) réception et mémorisation par ledit dispositif de routage (12), de données d'utilisateurs indiquant les droits liés à l'unité multimédia (STB) reliée au dispositif de routage (12);
c) réception par le dispositif de routage (12), d'une requête d'une unité multimédia pour l'obtention d'un contenu spécifique;
d) détermination par le dispositif de routage (12), des conditions d'accès liées audit contenu spécifique et à ladite unité multimédia (STB);
e) selon le résultat de cette détermination, diffusion ou non dudit contenu spécifique à ladite unité multimédia ayant transmis la requête;
f) exécution d'un cycle de réévaluation des droits de ladite unité multimédia, ce cycle de réévaluation comprenant les étapes d) et e).

2. Procédé de gestion de la diffusion de contenus selon la revendication 1, **caractérisé en ce que** le cycle de réévaluation des droits est exécuté lorsque lesdites conditions d'accès à au moins un contenu spécifique sont modifiées.

3. Procédé de gestion de la diffusion de contenus selon la revendication 1, **caractérisé en ce que** le cycle de réévaluation des droits est exécuté selon des intervalles de temps prédéfinis.

4. Procédé de gestion de la diffusion de contenus selon la revendication 1, **caractérisé en ce que** le cycle de réévaluation des droits est exécuté sur demande du fournisseur de contenus.

5. Procédé de gestion de la diffusion de contenus selon la revendication 1, **caractérisé en ce que** le cycle de réévaluation des droits est exécuté lorsqu'une durée prédéterminée est écoulée.

6. Procédé de gestion de la diffusion de contenus selon la revendication 1, **caractérisé en ce que** les droits liés à un contenu déterminé sont associés à un temps de validité.

7. Procédé de gestion de la diffusion de contenus selon la revendication 6, **caractérisé en ce que** le temps de validité est une date et une heure.

8. Procédé de gestion de la diffusion de contenus selon la revendication 6, **caractérisé en ce que** le temps de validité est une durée.

9. Procédé de gestion de la diffusion de contenu selon l'une quelconque des revendications 1 à 5, **caractérisé en ce que** les droits sont réévalués en simulant l'envoi d'une requête par l'unité multimédia au dispositif de routage.
